# EUROPÄISCHE PATENTSCHRIFT

(11) **EP 0 713 180 B1**
(45) Veröffentlichungstag und Bekanntmachung des Hinweises auf die Patenterteilung: **29.07.1998**
(21) Anmeldenummer: 94118109.1
(22) Anmeldetag: 17.11.1994
(51) Int. Cl.: G06F 11/20

(54) **Peripherie-Einheit mit erhöhter Verfügbarkeit**
Peripheral unit with enhanced availability
Unité périphérique à disponibilité renforcée

(43) Veröffentlichungstag der Anmeldung: 22.05.1996
(73) Patentinhaber: Siemens Nixdorf Informationssysteme AG, 33106 Paderborn (DE)
(72) Erfinder: Sachs, Harald, D-85649 Hofolding (DE)
(74) Vertreter: Epping, Wilhelm, Dr.-Ing.

(56) Entgegenhaltungen:
- EP-A- 0 287 301
- GB-A- 2 177 824
- US-A- 5 287 515
- PATENT ABSTRACTS OF JAPAN vol. 13, no. 383 (E-811)24. August 1989 & JP-A-11 033 469 (HIROSHI) 25. Mai 1989

## Beschreibung

Die Erfindung betrifft in Systemen vernetzter Rechner eingesetzte Peripherie-Einheiten, deren Verfügbarkeit durch die Erfindung erhöht wird.

Nach dem Stand der Technik werden komplexe Anwendungen auf Rechner-Systemen gefahren, die aus einer Vielzahl miteinander vernetzter Rechner, oft PCs oder Workstations, bestehen. Die häufigsten Anwendungen liegen im lokalen Bereich, wo über Local Area Networks vernetzt wird. Gewöhnlich verfügt jeder der miteinander vernetzten Rechner über eigene Plattenspeicher. Die ständige Verfügbarkeit der Daten auf allen Plattenspeichern ist für das Funktionieren des Rechner-Systems von entscheidender Bedeutung. Zunehmend werden auf der Gesamtheit der im Netz vorhandenen Plattenspeicher verteilte Datenbanken angelegt.

Um die Auswirkungen von Fehlern klein zu halten, werden nach dem Stand der Technik häufig die einzelnen Plattenspeicher als redundante Arrays (RAID) ausgeführt. Damit werden Fehler an den Laufwerken und der Laufwerks-Elektronik unschädlich gemacht. Gegen einen Fehler im restlichen Teil eines vernetzten Rechners hilft eine solche Maßnahme überhaupt nicht. Bedauerlicherweise haben solche Fehler eine mehrfach höhere Wahrscheinlichkeit als die Fehler in den Plattenspeichern und der zugehörigen Elektronik.

Die Anordnungen gemäß der hier vorgelegten Erfindung, für die Patentschutz beantragt wird, ermöglicht den Zugriff auf an fehlerbehaftete, nicht mehr funktionsfähige Rechner angeschlossene, selbst fehlerfreie Peripherie-Einheiten. Es können also Peripherie-Einheiten eines vernetzten Rechners im Falle des Ausfalls dieses Rechners weiter vom System benützt werden. Falls diese Peripherie-Einheiten Plattenspeicher sind, wird die Integrität der Daten und der verteilten Datenbanken und die Zugänglichkeit zu den Daten auf den Plattenspeichern der vernetzten Rechner, auch wenn diese auf Grund von Fehlern nicht funktionsfähig sind, erhalten, solange die daran angeschlossenen Plattenspeicher-Einheiten noch fehlerfrei arbeiten.

Damit wird es viel seltener notwendig, Datenbestände durch das sehr zeitaufwendige Wiederholen aller Transaktionen seit dem letzten Wiederaufsetzpunkt (seit der letzten Sicherung) zu aktualisieren.

Die Aufgabe der Erfindung wird erfindungsgemäß nach den Ansprüchen 1-10 gelöst.

Bei der erfindungsgemäßen Anordnung verfügt jede Peripherie-Einheit, die auch im Falle des Ausfalls des Rechners, an den sie direkt angeschlossen ist, zugänglich bleiben soll, über mindestens einen zusätzlichen Anschluß an ein Kommunikations-Netz, vorzugsweise ein Local Area Network, der auch bei Ausfall des diese Peripherie-Einheit beherbergenden Rechners funktionsfähig bleibt, und über den diese Peripherie-Einheit für die an dieses Kommunikations-Netz angeschlossene Rechner zugänglich bleibt.

In einer Ausführungsform ist mindestens ein Anschluß an das selbe Kommunikations-Netz angeschlossen, über das die das Rechnersystem bildenden Rechner vernetzt sind. So kann bei Ausfall eines Rechners jeder der das Rechnersystem bildenden Rechner mit an den ausgefallenen Rechner angeschlossenen, entsprechend mit mindestens einem zusätzlichen Anschluß ausgestatteten Peripherie-Einheiten zusammenarbeiten.

In einer anderen Ausführungsform ist mindestens ein zusätzlicher Kommunikations-Anschluß an ein anderes als das Netz angeschlossen als das, über das die das Rechner-System bildenden Rechner vernetzt sind. Diese Ausführungsform ist dann vorteilhaft, wenn für den Betrieb dieses anderen Netzes ein Rechner-System mit erhöhter Ausfallsicherheit zur Verfügung steht.

Wenn eir Rechner durch welche Mittel auch immer als fehlerbehaftet erkannt wird, wird in einer Ausführungsform in der Peripherie-Einheit, die weiterhin benutzbar bleiben soll, manuell ein Anschluß an ein Kommunikations-Netz in dieser Peripherie-Einheit aktiviert. Der Zugang zu der weiterhin benutzbaren Peripherie-Einheit geschieht nun über einen Rechner, der ebenfalls einen Anschluß an das Kommunikations-Netz besitzt, mit dem der aktivierte Anschluß der weiterhin benutzbaren Peripherie-Einheit verbunden ist.

In einer anderen Ausführungsform testet eine Prüfeinrichtung in der weiterhin benutzbar bleiben sollenden Peripherie-Einheit die Funktionsfähigkeit des direkten Rechner-Anschlusses, entweder durch passives Beobachten der Schnittstellen-Sequenzen, die dann in bestimmten Mindestabständen ablaufen müssen, oder durch eine aktive Ausgabe von Befehlen an den direkt angeschlossenen Rechner. Bei negativem Testergebnis aktiviert die Prüfeinrichtung einen Anschluß an ein Kommunikations-Netz in dieser Peripherie-Einheit. Der Zugang zu der weiterhin benutzbaren Peripherie-Einheit geschieht nun über einen Rechner, der ebenfalls einen Anschluß an das Kommunikations-Netz besitzt, mit dem der aktivierte Anschluß der weiterhin benutzbaren Peripherie-Einheit verbunden ist.

### Beschreibung der Bilder

### Bild 1

Beispielhaft sind hier zwei Rechner Ri und Rj, jeweils aus einer über ein Bussystem BUS gekoppelte Zentraleinheit CPU, einem Speicher MEM, einer Plattenspeichereinheit DISK-U, einer Ein-/Ausgabe-Einheit IO-U und einer Kommunikations-Einheit COM-U bestehend, dargestellt. Beide Rechner sind miteinander mittels ihrer Kommunikations-Einheiten COM-U über das Kommunikations-Netz (CN) vemetzt. Die Kommunikations-Anschlüsse der Plattenspeichereinheiten sind an das selbe Kommunikations-Netz angeschlossen.

### Bild 2

In diesem Bild sind die Kommunikations-Anschlüsse der Plattenspeichereinheiten DISK-U, an ein anderes Kommunikations-Netz als das, das der Vernetzung der Rechner dient, angeschlossen. An dieses Kommunikations-Netz ist im Bild nicht dargestellt mindestens ein Rechner hoher Verfügbarkeit angeschlossen.

### Bild 3

zeigt das Blockschaltbild einer mit einem zusätzlichen Kommunikations-Anschluß, in diesem Fall einem Anschluß an ein Local Area Network (LAN), ausgestatteten Peripherie-Einheit. Die Bus-Emulations-Schaltung (BUS-EMUL) ist dem Multiplexer (MUX) vor- und die Konverter-Schaltung (KV) für die Ausgangs-Signale der funktionellen Logik (FL) ist dem Demutiplexer (DEMUX) nachgeschaltet.

Die Pfeile deuten in diesem und den folgenden Bildern die Wirkrichtung der Signale an, ungeachtet der Tatsache, daß sich einzelne Signale, wie beispielsweise Quittungs-Signale, entgegen der Pfeilrichtung bewegen.

Bus-Leitungsbündel sind wegen der in ihnen enthaltenen, vielen Signale mit dicken, dem Anschluß an Kommunikations-Netze dienende Leitungsbündel sind wegen der geringen Menge in ihnen enthaltener Signale mit dünnen Strichen gezeichnet.

### Bild 4

zeigt das Blockschaltbild einer Peripherie-Einheit mit mehreren, gleichartigen Anschlüssen an Kommunikations-Netze. Die Anschlüsse Ca und Cb dienen dem Anschluß an gleiche Local Area Networks wie der Anschluß Ck.

### Bild 5a

zeigt das Blockschaltbild der Eingangsseite einer Peripherie-Einheit mit mehreren, verschiedenartigen Anschlüssen Cm, Cn, Cr an Kommunikations-Netze und den direkten Anschluß B an den zugehörigen Rechner.

### Bild 5b

zeigt das Blockschaltbild der Ausgangsseite einer Peripherie-Einheit mit mehreren, verschiedenartigen Anschlüssen Cm, Cn, Cr an Kommunikations-Netze und den direkten Anschluß B an den zugehörigen Rechner.

### Bild 6a

zeigt das Blockschaltbild der Eingangsseite einer Peripherie-Einheit mit mehreren, verschiedenartigen (Cm, Cn) und mehreren gleichartigen (Ca, Cb, Ck) Anschlüssen an Kommunikations-Netze und den direkten Anschluß B an den zugehörigen Rechner.

### Bild 6b

zeigt das Blockschaltbild der Ausgangsseite einer Peripherie-Einheit mit mehreren, verschiedenartigen (Cm, Cn) und mehreren gleichartigen (Ca, Cb, Ck) Anschlüssen an Kommunikations-Netze und den direkten Anschluß B an den zugehörigen Rechner.

Bei beiden oben beschriebenen Ausführungsformen können im Falle von Peripherie-Einheiten mit mehreren Kommunikations-Anschlüssen Einrichtungen vorgesehen werden, die es erlauben, daß beim Betrieb der Peripherie-Einheit über einen Kommunikations-Anschluß programmiert ein anderer Kommunikations-Anschluß aktiviert wird.

In einer weiteren Ausführungsform kann jederzeit jeder Anschluß einer momentan nicht tätigen Peripherie-Einheit auf Anforderung eines beliebigen, mit diesem Anschluß über ein Kommunikations-Netz oder direkt verbundenen Rechners aktiv werden. Bei mehreren, gleichzeitigen Anforderungen entscheidet eine Arbitrier-Schaltung in der Peripherie-Einheit, welcher Anschluß aktiviert wird. Zugriffskonflikte beim Schreiben während lang dauernder Transaktionen werden mit Software-Mitteln gelöst, indem beispielsweise Programme, die zu schreiben beabsichtigen, eine Schreib-Berechtigung anfordern und vor dem Schreiben erhalten müssen. Diese Ausführungsform ist aufwendiger, aber auch leistungsfähiger, da sie auch im fehlerfreien Fall zusätzliche Anschlüsse für Plattenspeicher-Zugriffe bietet.

Um auch beim Ausfall der Versorgungsspannungen in einem vernetzten Rechner weiter mit den an ihn angeschlossenen Peripherie-Einheiten arbeiten zu können, muß in einer heute bekannten und üblichen Weise in einem solchen Rechner zumindest für die zugänglich bleiben sollenden Peripherie-Einheiten eine zweite Stromversorgung vorgesehen werden, deren Ausgangs-Spannungen diesen Peripherie-Einheiten diodenentkoppelt zugeführt werden.

Um auch beim Ausfall der Netzspannung an einem vernetzten Rechner weiter mit den an ihn angeschlossenen Peripherie-Einheiten arbeiten zu können, muß für diesen Rechner eine der handelsüblichen, unterbrechungsfreien Stromversorgungen vorgesehen werden.

Diese Verfahren, die Zugänglichkeit für direkt an fehlerbehaftete Rechner angeschlossene Peripherie-Einheiten zu erhalten, verbessern die Verfügbarkeit der Peripherie-Einheiten, weil die Ausfallwahrscheinlichkeit eines der das Rechner-System bildenden Rechner größer als die Ausfallwahrscheinlichkeit einer Peripherie-Einheit ist, sogar wenn diese mit zusätzlichen Anschlüssen ausgestattet ist. Die zusätzlichen Anschlüsse lassen sich mit einem oder wenigen hochintegrierten Bausteinen verwirklichen und erhöhen nur ganz unwesentlich die Kosten und die Ausfallwahrscheinlichkeit der Peripherie-Einheiten.

## Patentansprüche

1. Eine Peripherie-Einheit, die in einem aus vernetzten Rechnern bestehenden Rechner-System verfügbar bleibt, auch wenn der Rechner, an den sie direkt angeschlossen ist, auf Grund von Fehlern in seiner Logik oder seiner Stromversorgung ausfällt, dadurch gekennzeichnet, daß diese Peripherie-Einheit neben ihrem eigentlichen Anschluß an den zugehörigen Rechner mit jeweils mindestens einem zweiten Anschluß ausgestattet ist, der die Verbindung zu mindestens einem Kommunikations-Netz, in einer bevorzugten Ausführungsform einem Local Area Network, erlaubt, daß der zusätzliche Kommunikations-Anschluß oder gegebenenfalls die zusätzlichen Kommunikations-Anschlüsse an das selbe Kommunikations-Netz, das der Vernetzung des Rechner-Systems dient, oder an ein oder mehrere andere Kommunikations-Netze angeschlossen ist bzw. sind, oder daß bei mehreren Anschlüssen der Peripherie-Einheit an Kommunikations-Netze mindestens ein Anschluß an das selbe Kommunikations-Netz, das der Vernetzung des Rechner-Systems dient, und mindestens ein Anschluß an mindestens ein anderes Kommunikations-Netz angeschlossen ist.

2. Eine Peripherie-Einheit nach Anspruch 1, dadurch gekennzeichnet, daß die Schaltungen und die Stecker für den zweiten Anschluß und die eventuellen weiteren Anschlüsse dieser Peripherie-Einheit auf der Controller-Karte der Peripherie-Einheit oder einer sandwichartig auf die Controller-Karte aufgeschraubten oder angeklemmten Zusatzkarte untergebracht sind.

3. Eine Peripherie-Einheit nach den Ansprüchen 1 und 2 mit einem zusätzlichen Kommunikations-Netz-Anschluß, dadurch gekennzeichnet, daß der funktionellen Logik (FL in Bild 3) einer jeden Peripherie-Einheit eingangsseitig ein Multiplexer (MUX in Bild 3) vor- und ausgangsseitig ein Demultiplexer (DEMUX in Bild 3) nachgeschaltet sind, daß an den Multiplexer-Eingängen in einer ersten Schaltstellung des Multiplexers die Eingangs-Signale für die Peripherie-Einheit vom Bus des direkt angeschlossenen Rechners durchgeschaltet werden und in einer zweiten Schaltstellung des Multiplexers eine Bus-Emulations-Schaltung (BUS-EMUL in Bild 3) für die Emulation der die Eingangssignale der funktionellen Logik darstellenden Bus-Signale angeschaltet ist, wobei die Eingangssignale der Bus-Emulations-Schaltung aus dem Übertragungsprotokoll des Kommunikations-Netzes stammen und die Emulations-Schaltung so gestaltet ist, daß sie die Nutzinformation aus dem Übertragungsprotokoll des Kommunikations-Netzes entnimmt und ihre Ausgangssignale, gesteuert durch die über das Kommunikations-Netz übertragene und gegebenenfalls in der Emulations-Schaltung gepufferte Nutzinformation, das Verhalten der Bussignale für den direkten Anschluß an den zugehörigen Rechner emulieren, und daß an den Demultiplexer-Ausgängen in einer ersten Schaltstellung die Ausgangs-Signale der funktionellen Logik für den Bus des direkt angeschlossenen, zugehörigen Rechners durchgeschaltet werden und in einer zweiten Schaltstellung eine Konverter-Schaltung (KV in Bild 3) für die Erzeugung der Kommunikations-Netz-Signale angeschaltet ist, deren Ausgangssignale an das Kommunikations-Netz angeschlossen sind und die so gestaltet ist, daß sie die von der funktionellen Logik gelieferten und gegebenenfalls in der Konverter-Schaltung gepufferten Signale im Rahmen des Übertragungsprotokolls des vorgesehenen Kommunikations-Netzes überträgt, wobei der Multiplexer und der Demultiplexer sich jeweils in der gleichen Schaltstellung befinden und wobei der Anschluß, der mittels des Multiplexers und des Demultiplexers gegebenenfalls über die Emulations- und Konverter-Schaltungen mit der funktionellen Logik der Peripherie-Einheit verbunden ist, der einzige zu dieser Zeit aktive Anschluß ist.

4. Eine Peripherie-Einheit nach den Ansprüchen 1 und 2 mit einer Vielzahl gleicher Kommunikations-Netz-Anschlüsse, dadurch gekennzeichnet, daß der eingangsseitigen Emulations-Schaltung (BUS-EMUL in Bild 4) nach Anspruch 3 ein Multiplexer (MUX-P in Bild 4) mit soviel Eingängen, wie Kommunikations-Netz-Anschlüsse vorgesehen sind, vor- und der ausgangsseitigen Konverter-Schaltung (KV in Bild 4) nach Anspruch 3 auf der den Kommunikations-Netzen zugewandten Seite ein Demultiplexer (DEMUX-P in Bild 4) mit soviel Ausgängen, wie Kommunikations-Netz-Anschlüsse vorgesehen sind, nachgeschaltet sind, um mehrere, gleichartige Kommunikations-Netz-Anschlüsse zu realisieren, wobei jeweils der n-te Multiplexer-Eingang an das selbe Kommunikations-Netz angeschlossen ist wie der n-te Demultiplexer-Ausgang, wobei der vorgeschaltete Multiplexer (MUX-P in Bild 4) und der nachgeschaltete Demultiplexer (DEMUX-P in Bild 4) einerseits und die direkt an die funktionelle Logik angeschlossenen Multiplexer (MUX in Bild 4) und Demultiplexer (DEMUX in Bild 4) andererseits sich jeweils in der gleichen Schaltstellung befinden und wobei der Anschluß, der mittels der Multiplexer und Demultiplexer gegebenenfalls über die Emulations- und Konverter-Schaltungen mit der funktionellen Logik der Peripherie-Einheit verbunden ist, der einzige zu dieser Zeit aktive Anschluß ist.

5. Eine Peripherie-Einheit nach den Ansprüchen 1 und 2 mit einer Vielzahl verschiedenartiger Kommunikations-Netz-Anschlüsse (Bilder 5a und 5b), dadurch gekennzeichnet, daß der eingangsseitige Multiplexer (MUX in Bild 5a) einen Eingang für den direkten Anschluß an den zugehörigen Rechner und soviel Eingänge für Kommunikations-Netze, wie zusätzliche, verschiedenartige Netz-Anschlüsse vorgesehen sind, besitzt, wobei jedem der nicht für den direkten Rechner-Anschluß vorgesehenen Eingänge eine speziell für den jeweils gewünschten Kommunikations-Netz-Anschluß geeignete Bus-Emulations-Schaltung (BUS-EMUL1, BUS-EMUL2, BUS-EMULn in Bild 5a) vorgeschaltet ist und daß der ausgangsseitige Demultiplexer (DEMUX in Bild 5b) einen Ausgang für den direkten Anschluß an den zugehörigen Rechner und soviel Ausgänge für Kommunikations-Netze, wie zusätzliche, verschiedenartige Netz-Anschlüsse vorgesehen sind, besitzt, wobei jedem der nicht für den direkten Rechner-Anschluß vorgesehenen Ausgänge eine speziell für den jeweils gewünschten Kommunikations-Netz-Anschluß geeignete Konverter-Schaltung (KV1, KV2, KVn in Bild 5b) nachgeschaltet ist, wobei jeweils die an den n-ten Multiplexer-Eingang angeschlossene Bus-Emulations-Schaltung für das selbe Kommunikations-Netz geeignet und daran angeschlossen ist wie die an den n-ten Demultiplexer-Ausgang angeschlossene Konverter-Schaltung, wobei der Multiplexer und der Demultiplexer sich jeweils in der gleichen Schaltstellung befinden und wobei der Anschluß, der mittels der Multiplexer und Demultiplexer gegebenenfalls über die Emulations- und Konverter-Schaltungen mit der funktionellen Logik der Peripherie-Einheit verbunden ist, der einzige zu dieser Zeit aktive Anschluß ist.

6. Eine Peripherie-Einheit nach den Ansprüchen 1 und 2 mit einer Vielzahl gleich- und verschiedenartiger Kommunikations-Netz-Anschlüsse (Bild 6a und Bild 6b), dadurch gekennzeichnet, daß die gleichartigen Anschlüsse über den Emulations- bzw. Konverter-Schaltungen (BUS-EMULn in Bild 6a bzw. KVn in Bild 6b) eingangsseitig vor- und ausgangsseitig nachgeschaltete Multiplexer (MUX-P in Bild 6a) bzw. Demultiplexer (DEMUX-P in Bild 6b) entsprechend Anspruch 4 realisiert werden, wobei jeweils der n-te Multiplexer-Eingang an das selbe Kommunikations-Netz angeschlossen ist wie der n-te Demultiplexer-Ausgang, und daß die verschiedenartigen Anschlüsse über eigene, eingangsseitige Emulations-Schaltungen (BUS-EMUL1, BUS-EMUL2 in Bild 6a) bzw. ausgangsseitige Konverter-Schaltungen (KV1, KV2 in Bild 6b) verfügen, die an zusätzliche Eingänge des der funktionellen Logik vorgeschalteten Multiplexers (MUX in Bild 6a) bzw. an zusätzliche Ausgänge des ausgangsseitig an die funktionelle Logik angeschlossenen Demultiplexers (DEMUX in Bild 6b) entsprechend Anspruch 5 angeschlossen sind, wobei jeweils die an den n-ten Multiplexer-Eingang angeschlossene Bus-Emulations-Schaltung für das selbe Kommunikations-Netz geeignet und daran angeschlossen ist wie die an den n-ten Demultiplexer-Ausgang angeschlossene Konverter-Schaltung, wobei der vorgeschaltete Multiplexer (MUX-P in Bild 6a) und der nachgeschaltete Demultiplexer (DEMUX-P in Bild 6b) einerseits und die direkt an die funktionelle Logik angeschlossenen Multiplexer (MUX in Bild 6a) und Demultiplexer (DEMUX in Bild 6b) andererseits sich jeweils in der gleichen Schaltstellung befinden und wobei der Anschluß, der mittels der Multiplexer und Demultiplexer gegebenenfalls über die Emulations- und Konverter-Schaltungen mit der funktionellen Logik der Peripherie-Einheit verbunden ist, der einzige zu dieser Zeit aktive Anschluß ist.

7. Einrichtungen zur Aktivierung eines Anschlusses einer jeden Peripherie-Einheit, d. h. zum Durchschalten dieses Anschlusses zur funktionellen Logik, nach den Ansprüchen 1 bis 6, dadurch gekennzeichnet, daß sie beim fehlerfreien Hochfahren eines jeden Rechners den Anschluß in jeder Peripherie-Einheit, der der direkten Verbindung des Rechners mit dieser Peripherie-Einheit dient, aktiviert und damit alle anderen Anschlüsse dieser Peripherie-Einheit deaktiviert, daß zu beliebiger Zeit, aber zweckmäßiger Weise beim Auftreten eines schwerwiegenden Fehlers im diese Peripherie-Einheit beherbergenden Rechner manuell mit Hilfe eines dafür vorgesehenen Schalters ein beliebiger Anschluß dieser Peripherie-Einheit aktiviert werden kann, wobei mit der Aktivierung so eines Anschlusses gleichzeitig alle anderen Anschlüsse dieser Peripherie-Einheit deaktiviert sind, daß sie beim Auftreten von schwerwiegenden Fehlern beim Hochfahren eines Rechners einen beliebigen, eventuell vorher festgelegten Kommunikations-Anschluß aktiviert und daß beim Betrieb einer mit mehreren Kommunikations-Anschlüssen ausgerüsteten Peripherie-Einheit über einen Kommunikations-Anschluß über diesen Kommunikations-Anschluß programmiert auf einen anderen Kommunikations-Anschluß umgeschaltet werden kann.

8. Einrichtungen in den Peripherie-Einheiten nach den Ansprüchen 1 bis 6 zur Überprüfung der Funktionsfähigkeit des zur Zeit aktivierten direkten Rechner-Anschlusses und zur eventuellen Umschaltung auf eine anderen Anschluß, dadurch gekennzeichnet, daß der an diesen Anschluß angeschlossene Rechner innerhalb einer vereinbarten Maximalzeit in der Größenordnung von 300 bis 3000 µs einen Befehl, sei es ein produktiver oder ein nur für diesem Prüfzweck eingesetzter Befehl, der, ohne Nutz-Datenverkehr und ohne den Zustand des Systems zu ändern, abläuft, beispielweise ein Abfragebefehl für Anzeigen, an die Peripherie-Einheit abgibt und in der Peripherie-Einheit eine hardware-mäßig realisierte oder programmgesteuerte Test-Einrichtung den richtigen Verlauf und die Abstände dieser Ereignisse überprüft und im Falle eines festgestellten Fehlers einen anderen, vorher festgelegten Anschluß dieser Peripherie-Einheit aktiviert und daß beim Betrieb einer mit mehreren Kommunikations-Anschlüssen ausgerüsteten Peripherie-Einheit über einen Kommunikations-Anschluß über diesen Kommunikations-Anschluß programmiert auf einen anderen Kommunikations-Anschluß umgeschaltet werden kann.

9. Einrichtungen in den Peripherie-Einheiten nach den Ansprüchen 1 bis 6 zur Überprüfung der Funktionsfähigkeit des zur Zeit aktivierten direkten Rechner-Anschlusses und zur eventuellen Umschaltung auf eine anderen Anschluß, dadurch gekennzeichnet, daß die Peripherie-Einheit den Rechner-Anschluß und den direkt angeschlossenen Rechner bezüglich seiner Ein-/Ausgabe-Funktionalität durch von ihr selbst an den Rechner ausgegebene Befehle, wie sie beispielsweise bei an den SCSI-Bus angeschlossenen Peripherie-Einheiten möglich sind, testet und im Falle eines festgestellten Fehlers einen anderen, vorher festgelegten Anschluß dieser Peripherie-Einheit aktiviert und daß beim Betrieb einer mit mehreren Kommunikations-Anschlüssen ausgerüsteten Peripherie-Einheit über einen Kommunikations-Anschluß über diesen Kommunikations-Anschluß programmiert auf einen anderen Kommunikations-Anschluß umgeschaltet werden kann.

10. Einrichtungen in Peripherie-Einheiten nach den Ansprüchen 1 bis 6 mit einem direkten Anschluß an einen Rechner und einem oder mehreren zusätzlichen Anschlüssen an Kommunikations-Netze, mit deren Hilfe jederzeit jeder Anschluß einer momentan nicht tätigen Peripherie-Einheit aktiviert werden kann, dadurch gekennzeichnet, daß die Aktivierung jeweils eines Anschlusses durch eine an jedem Kommunikations-Anschluß und am Bus-Anschluß an den eigenen Rechner angebrachte Detektor-Schaltung für Anforderungen an diesen Anschluß erfolgt und wobei im Falle mehrerer, gleichzeitiger Anforderungen an den Anschlüssen eine Arbitrier-Schaltung entscheidet, welcher Anschluß aktiviert wird.

## Claims

1. Peripheral unit which remains available in a computer system that comprises interlinked computers, even if the computer to which said unit is directly connected fails because of faults in its logic or its power supply, characterized in that this peripheral unit, in addition to its actual connection to the associated computer, is equipped in each case with at least a second connection, which permits connection to at least one communications network, a local area network in a preferred embodiment, in that the additional communications connection or, if appropriate, the additional communications connections is or are connected to the same communications network that serves to interlink the computer system, or to one or more other communications networks, or in that, in the case of more than one connection of the peripheral unit to communications networks, at least one connection is connected to the same communications network that serves to interlink the computer system and at least one connection is connected to at least one other communications network.

2. Peripheral unit according to Claim 1, characterized in that the circuits and the plugs for the second connection and the possible further connections of this peripheral unit are accommodated on the controller card of the peripheral unit or on an additional card that is screwed or clamped onto the controller card in a sandwich fashion.

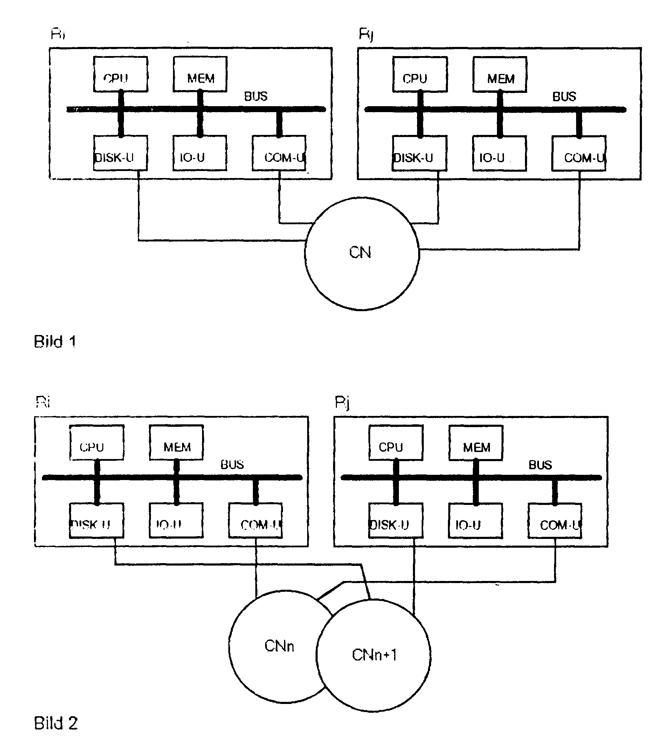

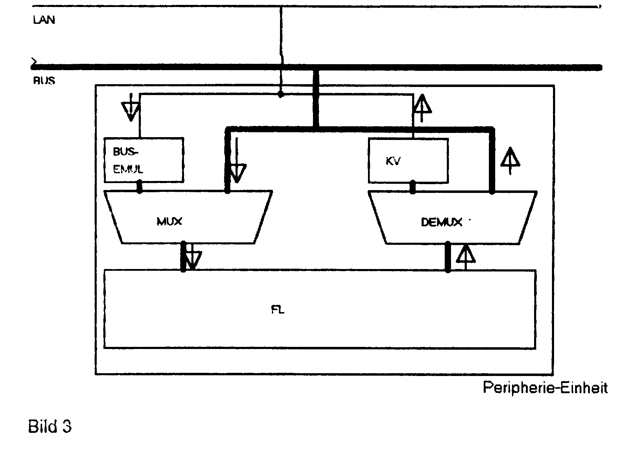

3. A peripheral unit according to Claims 1 and 2 having an additional communications network connection, characterized in that the functional logic (FL in Figure 3) of each peripheral unit is preceded on the input side by a multiplexer (MUX in Figure 3) and followed on the output side by a demultiplexer (DEMUX in Figure 3), in that at the multiplier inputs, in a first switching position of the multiplexer, the input signals for the peripheral unit are switched through from the bus of the directly connected computer and, in a second switching position of the multiplexer, a bus emulation circuit (BUS-EMUL in Figure 3) for the emulation of the bus signals representing the input signals of the functional logic is connected in, the input signals of the bus emulation circuit originating from the transmission protocol of the communications network and the emulation circuit being configured such that it takes the useful information from the transmission protocol of the communications network, and its output signals, controlled by the useful information that is transmitted over the communications network and, if necessary, buffered in the emulation circuit, emulating the behaviour of the bus signals for the direct connection to the associated computer, and in that at the demultiplexer outputs, in a first switching position, the output signals of the functional logic for the bus of the directly connected, associated computer are switched through and, in a second switching position, a converter circuit (KV in Figure 3) for generating the communications network signals is connected in, the output signals of which converter circuit are connected to the communications network and the converter circuit is configured such that it transmits the signals that are supplied by the functional logic and, if necessary, buffered in the control circuit, within the framework of the transmission protocol of the communications network provided, the multiplexer and the demultiplexer each being in the same switching position and the connection that is connected to the functional logic of the peripheral unit by means of the multiplexer and demultiplexer, if necessary via the emulation and converter circuits, being the only connection that is active at this time.

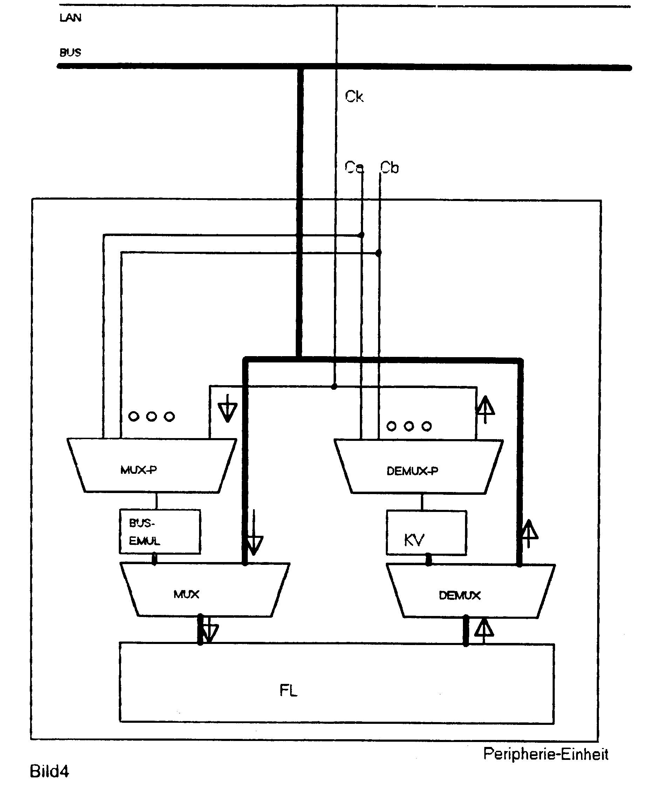

4. A peripheral unit according to Claims 1 and 2 having a multiplicity of identical communications network connections, characterized in that a multiplexer (MUX-P in Figure 4) having as many inputs as there are communications network connections is connected upstream of the input-side emulation circuit (BUS-EMUL in Figure 4) according to Claim 3, and a demultiplexer (DEMUX-P in Figure 4) having as many outputs as there are communications network connections is connected downstream of the output-side converter circuit (KV in Figure 4), in order to implement a plurality of communications network connectors of identical type, in each case the nth multiplexer input being connected to the same communications network as the nth demultiplexer output, the upstream multiplexer (MUX-P in Figure 4) and the downstream demultiplexer (DEMUX-P in Figure 4), on the one hand, and the multiplexer that is connected directly to the functional logic (MUX in Figure 4) and demultiplexer that is connected directly to the functional logic (DEMUX in Figure 4), on the other hand, each being in the same switching position and the connection that is connected to the functional logic of the peripheral unit by means of the multiplexer and demultiplexer, if necessary via the emulation and converter circuits, being the only connection that is active at this time.

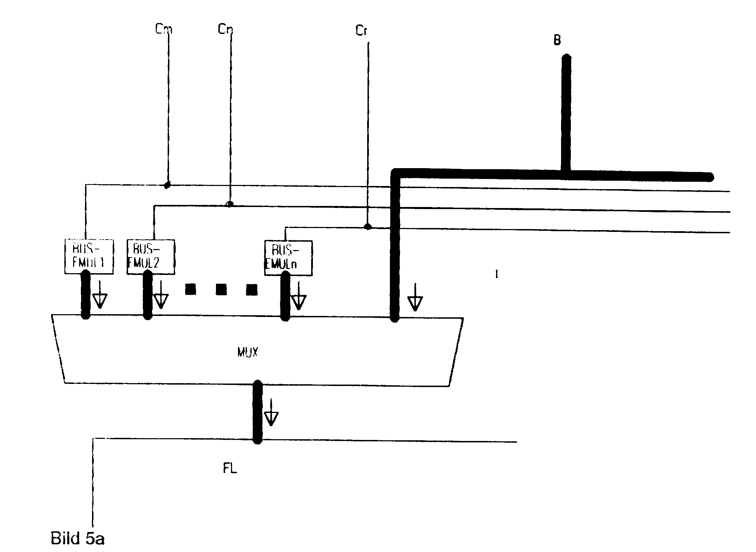

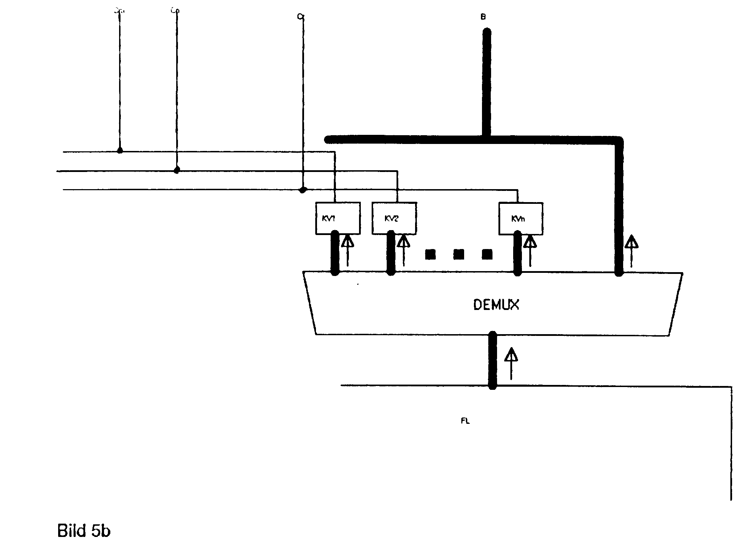

5. A peripheral unit according to Claims 1 and 2 having a multiplicity of communications network connections of different types (Figures 5a and 5b), characterized in that the input-side multiplexer (MUX in Figure 5a) has an input for the direct connection to the associated computer and as many inputs for communications networks as there are additional network connections of different types, each of the inputs not provided for the direct computer connection being preceded by a bus emulation circuit that is specifically suitable for the respectively desired communications network connection (BUS-EMUL1, BUS-EMUL2, BUS-EMULn in Figure 5a), and in that the output-side demultiplexer (DEMUX in Figure 5b) has an output for the direct connection to the associated computer and as many outputs for communications networks as there are additional network connections of different types, each of the outputs not provided for the direct computer connection being followed by a converter circuit that is specifically suitable for the respectively desired communications network connection (KV1, KV2, KVn in Figure 5b), in each case the bus emulation circuit that is connected to the nth multiplexer input being suitable for, and connected to, the same communications network as the converter circuit that is connected to the nth demultiplexer output, the multiplexer and the demultiplexer each being in the same switching position and the connection that is connected to the functional logic of the peripheral unit by means of the multiplexer and demultiplexer, if necessary via the emulation and converter circuits, being the only connection that is active at this time.

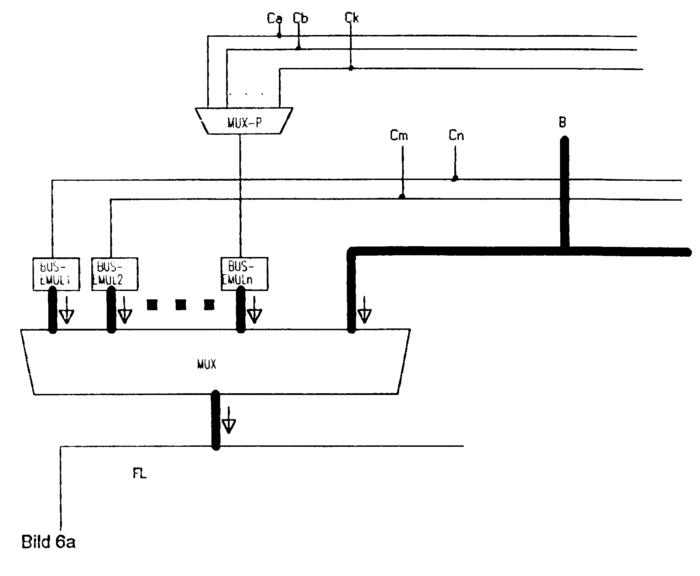

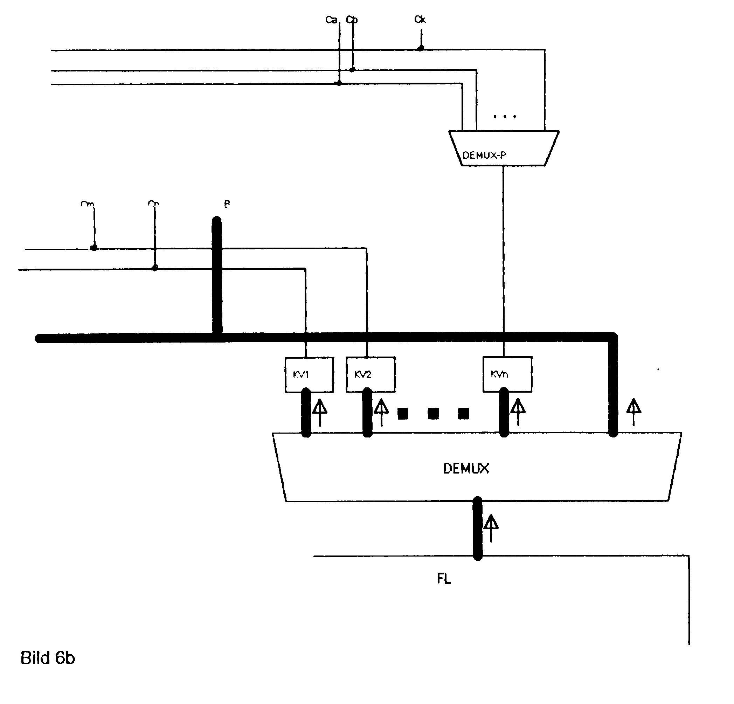

6. A peripheral unit according to Claims 1 and 2 having a multiplicity of communications network connections of identical and different types (Figures 6a and 6b), characterized in that the identical connections are implemented via the multiplexer that is provided upstream of the emulation circuit (BUS-EMULn in Figure 6a) on the input side (MUX-P in Fig. 6a) and the demultiplexer that is provided downstream of the converter circuit (KVa in Figure 6b) on the output side (DEMUX-P in Figure 6b), said multiplexer and demultiplexer being in accordance with Claim 4, in each case the nth multiplexer input being connected to the same communications network as the nth demultiplexer output, and in that the connections of different types have their own input-side emulation circuits (BUS-EMUL1, BUS-EMUL2 in Figure 6a) and output-side converter circuits (KV1, KV2 in Figure 6b), and said emulation circuits are connected to additional inputs of the multiplexer that is provided upstream of the functional logic (MUX in Figure 6a) and said converter circuits are connected to additional outputs of the demultiplexer that is connected on the output side of the functional logic (DEMUX in Figure 6b), said multiplexer and demultiplexer being in accordance with Claim 5, in each case the bus emulation circuit that is connected to the nth multiplexer input being suitable for, and connected to, the same communications network as the converter circuit that is connected to the nth demultiplexer output, the upstream multiplexer (MUX-P in Figure 6a) and the downstream demultiplexer (DEMUX-P in Figure 6b), on the one hand, and the multiplexer that is connected directly to the functional logic (MUX in Figure 6a) and demultiplexer that is connected directly to the functional logic (DEMUX in Figure 6b), on the other hand, each being in the same switching position and the connection that is connected to the functional logic of the peripheral unit by means of the multiplexer and demultiplexer, if necessary via the emulation and converter circuits, being the only connection that is active at this time.

7. Devices for activating a connection of each peripheral unit, that is to say for switching this connection through to the functional logic, according to Claims 1 to 6, characterized in that, in the event of each computer being started up without faults, the device activates that connection in each peripheral unit which serves to connect the computer directly to this peripheral unit, and hence deactivates all the other connections of this peripheral unit, in that at any desired time, but expediently on the occurrence of a serious fault in the computer accommodating this peripheral unit, any desired connection of this peripheral unit can be activated manually with the aid of a switch provided for this purpose, the activation of such a connection being accompanied by all the other connections of this peripheral unit being simultaneously deactivated, in that, on the occurrence of serious faults when a computer is being started up, any desired, possibly previously defined, communications connection is activated, and in that, in the event of a peripheral unit that is equipped with a plurality of communications connections being operated via one communications connection, it is possible to switch over, under program control, via this communications connection, to another communications connection.

8. Devices in the peripheral units according to Claims 1 to 6 for checking the serviceability of the direct computer connection that is currently active and for possibly switching over to another connection, characterized in that, within an agreed maximum time of the order of magnitude of 300 to 3000 µs, the computer that is connected to this connection outputs to the peripheral unit a command, be it a productive command or one that is used only for this test purpose, which executes without useful data traffic and without changing the state of the system, for example a query command for displays, and in the peripheral unit a test device that is implemented in hardware or under program control checks the correct progress and the intervals between these events and, in the event of a fault being detected, activates another, previously defined connection of this peripheral unit, and in that, in the event of a peripheral unit that is equipped with a plurality of communications connections being operated via one communications connection, it is possible to switch over, under program control, via this communications connection to another communications connection.

9. Devices in the peripheral units according to Claims 1 to 6 for checking the serviceability of the direct computer connection that is currently active and for possibly switching over to another connection, characterized in that, the peripheral unit tests the computer connection and the directly connected computer with respect to the input/output functionality of the peripheral unit by means of commands which the peripheral unit itself outputs to the computer and which are possible, for example, in the case of peripheral units that are connected to the SCSI bus and, in the event of a fault being detected, the peripheral unit activates another, previously defined connection of this peripheral unit, and in that, in the event of a peripheral unit that is equipped with a plurality of communications connections being operated via one communications connection, it is possible to switch over, under program control, via this communications connection to another communications connection.

10. Devices in peripheral units according to Claims 1 to 6 having a direct connection to a computer and one or more additional connections to communications networks, with the aid of which devices, at any time, any connection of a peripheral unit that is not active at that moment can be activated, characterized in that the activation of a respective connection is performed by a detector circuit that is fitted on each communications connection and on the bus connection to its own computer and detects requests on this connection and, in the event of a plurality of simultaneous requests on the connections, an arbitration circuit decides which connection is activated.

## Revendications

1. Une unité périphérique qui reste disponible dans un système d'ordinateurs constitué d'ordinateurs en réseau, même si l'ordinateur auquel elle est directement raccordée tombe en panne en raison d'erreurs dans sa logique ou dans alimentation en courant, caractérisée en ce que cette unité périphérique est munie, en plus de sa borne proprement dite de raccordement à l'ordinateur associé, d'au moins une deuxième borne qui permet la liaison avec au moins un réseau de communication, dans un mode de réalisation préféré un Local Area Network, en ce que la borne de communication supplémentaire ou éventuellement les bornes de communication supplémentaires est ou sont raccordée(s) au même réseau de communication que le réseau qui sert à la mise en réseau du système d'ordinateurs ou à un ou plusieurs autres réseaux de communication, ou en ce que, pour plusieurs bornes de l'unité périphérique de raccordement à des réseaux de communication, au moins une borne est raccordée au même réseau de communication que le réseau qui sert à la mise en réseau du système d'ordinateurs et au moins une borne est raccordée à au moins un autre réseau de communication.

2. Unité périphérique suivant la revendication 1, caractérisée en ce que les circuits et les connecteurs pour la deuxième borne et les bornes supplémentaires éventuelles de cette unité périphérique sont montés sur la carte de contrôleur de l'unité périphérique ou sur une carte supplémentaire vissée ou accrochée en sandwich à la carte du contrôleur.

3. Unité périphérique suivant les revendications 1 à 2, comportant une borne supplémentaire de raccordement à des réseaux de communication, caractérisée en ce que, du côté de l'entrée, un multiplexeur (MUX à la figure 3) et, du côté de sortie, un démultiplexeur (DEMUX à la figure 3) sont montés respectivement en amont et en aval de la logique (FL à la figure 3) fonctionnelle de chacune des unités périphériques, en ce que, aux entrées du multiplexeur, en une première position de connexion du multiplexeur, les signaux d'entrée destinés à l'unité périphérique sont envoyés par le bus de l'ordinateur directement raccordé et, en une deuxième position de connexion du multiplexeur, un circuit (BUS-EMUL à la figure 3) d'émulation de bus pour l'émulation des signaux de bus représentant les signaux d'entrée de la logique fonctionnelle est raccordé, les signaux d'entrée du circuit d'émulation de bus provenant du protocole de transmission du réseau de communication et le circuit d'émulation étant conformé de telle manière qu'il prélève l'information utile du protocole de transmission du réseau de communication et que ces signaux de sortie, en étant commandés par l'information utile transmise par l'intermédiaire du réseau de communication et éventuellement bufférisés dans le circuit d'émulation émulent le comportement des signaux de bus pour le raccordement direct à l'ordinateur associé et qu'en ce que, au sortie du démultiplexeur, en une première position de connexion, les signaux de sortie de la logique fonctionnelle sont envoyés pour le bus de l'ordinateur associé, directement raccordés, et, en une deuxième position de connexion, il est raccordé pour la production des signaux de réseau de communication un circuit (KV à la figure 3) convertisseur, dont les signaux de sortie sont raccordés au réseau de communication et qui est conformé de telle manière qu'il transmet dans le cadre du protocole de transmission du réseau de communication prévu les signaux fournis par la logique fonctionnelle et éventuellement bufférisés dans le circuit convertisseur, le multiplexeur et le démultiplexeur se trouvant chacun en la même positon de connexion et la borne qui est reliée au moyen du multiplexeur et du démultiplexeur, éventuellement par l'intermédiaire du circuit d'émulation et du circuit convertisseur, à la logique fonctionnelle de l'unité périphérique étant la seule borne active à ce moment.

4. Unité périphérique suivant les revendications 1 et 2, comportant une pluralité de mêmes bornes de raccordement à des réseaux de communication, caractérisée en ce qu'un multiplexeur (MUX-P à la figure 4) comportant autant d'entrées qu'il est prévu de bornes de raccordement à des réseaux de communication est monté en amont du circuit (BUS-EMUL à la figure 4) d'émulation d'entrée suivant la revendication 3 et un démultiplexeur (DEMUX-P à la figure 4) comportant autant de sorties qu'il est prévu de bornes de raccordement à des réseaux de communication est monté en aval du circuit (KV à la figure 4) convertisseur de sortie suivant la revendication 3, du côté tourné vers les réseaux de communication, afin de réaliser plusieurs bornes du même genre de raccordement à des réseaux de communication, la énième entrée du multiplexeur étant raccordée au même réseau de communication que la énième sortie du démultiplexeur, le multiplexeur (MUX-P à la figure 4) en amont et le démultiplexeur (DEMUX-P à la figure 4) en aval, d'une part, et le multiplexeur (MUX à la figure 4) et le démultiplexeur (DEMUX à la figure 4) directement raccordés à la logique fonctionnelle, d'autre part, se trouvant en la même position de connexion et la borne de raccordement qui est reliée au moyen du multiplexeur et du démultiplexeur, éventuellement par l'intermédiaire du circuit d'émulation et du circuit convertisseur, à la logique fonctionnelle de l'unité périphérique étant la seule borne de raccordement active à ce moment.

5. Unité périphérique suivant les revendications 1 et 2, comportant une pluralité de bornes (figures 5a et 5b) de genres divers de raccordement à des réseaux de communication, caractérisée en ce que le multiplexeur (MUX à la figure 5a) d'entrée a une entrée pour le raccordement direct à l'ordinateur associé et autant d'entrées pour des réseaux de communication qu'il est prévu de bornes de raccordement à un réseau supplémentaire de genres divers, un circuit (BUS-EMUL1, BUS-EMUL2, BUS-EMULn à la figure 5a) d'émulation de bus qui convient spécialement à la borne souhaitée de raccordement à des réseaux de communication étant monté en aval de chacune des entrées qui ne sont pas prévues pour le raccordement direct à l'ordinateur, et en ce que le démultiplexeur (DEMUX à la figure 5b) de sortie a une sortie pour le raccordement direct à l'ordinateur associé et autant de sorties pour des réseaux de communication qu'il est prévu de bornes de raccordement aux réseaux supplémentaires de genres divers, un circuit (KV1, KV2, KVn à la figure 5b) qui convient spécialement à la borne souhaitée de raccordement à des réseaux de communication étant monté en aval de chacune des sorties prévues pour le raccordement direct à l'ordinateur, le circuit d'émulation de bus raccordé à la énième entrée du multiplexeur convenant pour le même réseau de communication et étant raccordé au même réseau de communication que le circuit convertisseur raccordé à la énième sortie du démultiplexeur, le multiplexeur et le démultiplexeur se trouvant en la même position de connexion et la borne de raccordement qui est reliée au moyen du multiplexeur et du démultiplexeur, éventuellement par l'intermédiaire du circuit d'émulation et du circuit convertisseur, à la logique fonctionnelle de l'unité périphérique étant la seule borne active à ce moment.

6. Unité périphérique suivant les revendications 1 et 2, comportant une pluralité de bornes (figure 6a et figure 6b) du même genre et de genres divers de raccordement à des réseaux de communication, caractérisée en ce que les bornes du même genre sont réalisées suivant la revendication 4 par l'intermédiaire de multiplexeur (MUX-P à la figure 6a) monté à l'entrée en amont du circuit (BUS-EMULn à la figure 6a) d'émulation et de démultiplexeur (DEMUX-P à la figure 6b) de sortie monté en aval du circuit (KVn à la figure 6b) convertisseur, la énième entrée du multiplexeur étant raccordée au même réseau de communication que la énième sortie du démultiplexeur, et en ce que les bornes de genres divers disposent de circuits (BUS-EMUL1, BUS-EMUL2 à la figure 6a) d'entrée et de circuits (KV1, KV2, à la figure 6b) convertisseurs de sortie propre qui sont raccordés suivant la revendication 5 à des entrées supplémentaires du multiplexeur (MUX à la figure 6a) monté en amont de la logique fonctionnelle et à des sorties supplémentaires du démultiplexeur (DEMUX à la figure 6b) de sortie raccordé à la logique fonctionnelle, le circuit d'émulation de bus raccordé à la énième entrée du multiplexeur convenant au même réseau de communication et étant raccordé au même réseau de communication que le circuit convertisseur raccordé à la énième sortie du démultiplexeur, le multiplexeur (MUX-P à la figure 6a) en amont et le démultiplexeur (DEMUX-P à la figure 6b) en aval, d'une part, et le multiplexeur (MUX à la figure 6a) et le démultiplexeur (DEMUX à la figure 6b) raccordés directement à la logique fonctionnelle, d'autre part, se trouvant en la même positon de connexion et la borne qui est reliée au moyen des multiplexeurs et démultiplexeurs, éventuellement par l'intermédiaire du circuit d'émulation et du circuit convertisseur, à la logique fonctionnelle de l'unité périphérique étant la seule borne active à ce moment.

7. Dispositif pour activer une borne de chaque unité périphérique, c'est-à-dire pour interconnecter cette borne avec la logique fonctionnelle, suivant les revendications 1 à 6, caractérisé en ce que. en cas de démarrage sans erreur de chaque ordinateur, ils activent la borne dans chaque unité périphérique qui sert à la liaison directe de l'ordinateur avec cette unité périphérique et donc désactivent toutes les autres bornes de cette unité périphérique, en ce que, à un instant quelconque, mais avantageusement en cas d'apparition d'une erreur grave dans cet ordinateur hébergeant l'unité périphérique, une borne quelconque de cette unité périphérique peut être activée manuellement à l'aide d'un commutateur prévu à cet effet, toutes les autres bornes de cette unité périphérique étant en même temps désactivées par l'activation d'une telle borne, en ce que, en cas d'apparition d'erreur grave lors du démarrage d'un ordinateur, ils activent une borne de communication quelconque, éventuellement déterminée à l'avance et en ce que, lors du fonctionnement d'une unité périphérique munie de plusieurs bornes de communication par l'intermédiaire d'une borne de communication, il peut être commuté à une autre borne de communication de manière programmée par l'intermédiaire de cette borne de communication.

8. Dispositif prévu dans les unités périphériques suivant les revendications 1 à 6 pour vérifier la capacité fonctionnelle de la borne de raccordement direct à l'ordinateur activée sur le moment et pour éventuellement commuter à une autre borne, caractérisé en ce que l'ordinateur raccordé à cette borne fournit à l'unité périphérique, en l'espace d'une durée maximum négociée de l'ordre de grandeur de 300 à 3 000 µs, une instruction, qu'il s'agisse d'une instruction productive ou d'une instruction qui n'est introduite qu'à cet effet de test, qui se déroule sans trafic de données utiles et sans modifier l'état du système, par exemple une instruction d'interrogation pour affichage, et, dans l'unité périphérique, un dispositif de test réalisé en matériel ou commandé par programme vérifie le déroulement correct et les intervalles entre ces événements et, en cas d'erreur constatée, active une autre borne déterminée à l'avance de cette unité périphérique, et en ce que, lors du fonctionnement d'une unité périphérique munie de plusieurs bornes de communication par l'intermédiaire d'une borne de communication, il peut être commuté, de manière programmée par l'intermédiaire de cette borne de communication, à une autre borne de communication.

9. Dispositif prévu dans les unités périphériques suivant les revendications 1 à 6 pour vérifier la capacité fonctionnelle de la borne de raccordement direct à l'ordinateur activé sur le moment et pour commuter éventuellement à une autre borne, caractérisé en ce que l'unité périphérique teste la borne de raccordement à l'ordinateur et l'ordinateur directement raccordé du point de vue de sa fonctionnalité d'entrée/sortie par des instructions qu'elle émet elle-même à destination de l'ordinateur et telles qu'elles sont possibles par exemple pour des unités périphériques raccordées au bus SCSI et, en cas d'erreur constatée, active une autre borne déterminée à l'avance de cette unité périphérique et en ce que, lors du fonctionnement d'une unité périphérique munie de plusieurs bornes de communication par l'intermédiaire d'une borne de communication, il peut être commuté, de manière programmée par l'intermédiaire de cette borne de communication, à une autre borne de communication.

10. Dispositif prévu dans des unités périphériques suivant les revendications 1 à 6, comportant un raccordement direct à un ordinateur et un raccordement ou plusieurs raccordements supplémentaires à des réseaux de communication à l'aide desquels chaque borne d'une unité périphérique provisoirement inactive peut être activée à tout moment, caractérisé en ce que l'activation d'une borne s'effectue par un circuit détecteur monté sur chaque borne de communication et sur la borne de bus de raccordement à l'ordinateur spécifique et destiné à des demandes faites à cette borne et, en cas de plusieurs demandes simultanées adressées aux bornes, un circuit arbitre décidant de la borne qui doit être activée.
